# EUROPÄISCHE PATENTANMELDUNG

(11) **EP 1 288 516 A1**
(43) Veröffentlichungstag der Anmeldung: **05.03.2003**
(21) Anmeldenummer: 02015473.8
(22) Anmeldetag: 12.07.2002
(51) Int. Cl.: F16D 3/62, F16D 3/06, F16D 3/72

(54) **Vorrichtung zur Drehmomentübertragung**

(30) Priorität: 16.08.2001 DE 10140067
(71) Anmelder: Volkswagen Aktiengesellschaft, 38436 Wolfsburg (DE)
(72) Erfinder: Vöge, Wolfgang, 38110 Braunschweig (DE)

(57) **Zusammenfassung**

Die Erfindung betrifft eine Vorrichtung (10) zur Drehmomentübertragung von einer antreibenden Welle auf eine angetriebene Welle, wobei die Vorrichtung (10) eine radial innen liegende Befestigung (12) für eine der beiden Wellen und eine radial außen liegende Befestigung (14) für die entsprechend andere Welle aufweist. Hierbei weist die Vorrichtung (10) zwischen der radial innen liegenden Befestigung (12) und der radial außen liegenden Befestigung (14) einen ersten Verformungsbereich (20) auf, welcher mittels elastischer Verformung eine axiale Relativbewegung (22) zwischen der radial innen liegenden Befestigung (12) und der radial außen liegenden Befestigung (14) ermöglicht. Ferner weist die Vorrichtung (10) an der radial außen liegenden Befestigung (14) eine sich parallel zu den Wellen erstreckende Lasche (24) mit einem zweiten Verformungsbereich (28) auf, welcher mittels elastischer Verformung eine radiale Relativbewegung (26) zwischen der radial innen liegenden Befestigung (12) und der radial außen liegenden Befestigung (14) ermöglicht.

## Beschreibung

Die Erfindung betrifft eine Vorrichtung zur Drehmomentübertragung von einer antreibenden Welle auf eine angetriebene Welle, wobei die Vorrichtung eine radial innen liegende Befestigung für eine der beiden Wellen und eine radial außen liegende Befestigung für die entsprechend andere Welle aufweist, gemäß dem Oberbegriff des Anspruchs 1.

Bei einer drehmomentübertragenden Verbindung zwischen einer Kurbelwelle einer Brennkraftmaschine und einem Getriebe eines Kraftfahrzeuges sind Toleranzen bei der axialen und radialen Ausrichtung von Kurbelwelle und Getriebeeingangswelle besonders problematisch, weil sie zu unerwünschten Belastungen von Wellen und Lagern im Antriebsstrang führen. Zum Ausgleich von Fluchtungsfehlern zwischen zwei Wellen beschreibt die DE 34 46 379 A1 eine Blattfedervorrichtung, bei der Blattfedern ein Schwungrad einer Kurbelwelle mit einem Frontdeckel eines Drehmomentwandlers verbinden. Dabei können die Blattfedern in ihren Befestigungspunkten schwenken und ein Befestigungspunkt ist mit einem Langloch ausgebildet, so daß die Blattfedern in einer Längsrichtung derselben beweglich sind. Dies gleicht axiale und radiale Fluchtungsfehler zwischen der Kurbelwelle und dem Frontdeckel aus. Die Blattfedern dienen gleichzeitig einer Torsionsschwingungsdämpfung.

Aus der DE 195 41 195 C2 ist ferner eine Ausgleich-Kupplung bekannt, welche axiale, radiale und winklige Fluchtfehler zwischen einer Pumpenwelle und einer in diese gesteckte Motorwelle ausgleicht. Hierzu ist ein entsprechendes Spiel zwischen den Wellen vorgesehen, wobei Zwischenglieder in Form von zylindrischen Stäben koaxial zur Pumpen- und Motorwelle vorgesehen sind, welche in entsprechende zylindrische Ausnehmungen eingreifen.

Beide vorgenannten Systeme haben jedoch den Nachteil, daß die Drehmomentübertragung mit entsprechendem Spiel erfolgt.

Der vorliegenden Erfindung liegt die Aufgabe zugrunde, eine Vorrichtung der obengenannten Art bzgl. Drehmomentübertragung und Toleranzausgleich zu verbessern und gleichzeitig konstruktiv zu vereinfachen.

Diese Aufgabe wird erfindungsgemäß durch eine Vorrichtung der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die Vorrichtung zwischen der radial innen liegenden Befestigung und der radial außen liegenden Befestigung einen ersten Verformungsbereich aufweist, welcher mittels elastischer Verformung eine axiale Relativbewegung zwischen der radial innen liegenden Befestigung und der radial außen liegenden Befestigung ermöglicht, und daß die Vorrichtung an der radial außen liegenden Befestigung eine sich parallel zu den Wellen erstreckende Lasche mit einem zweiten Verformungsbereich aufweist, welcher mittels elastischer Verformung eine radiale Relativbewegung zwischen der radial innen liegenden Befestigung und der radial außen liegenden Befestigung ermöglicht.

Dies hat den Vorteil, daß die Vorrichtung zur Drehmomentübertragung sowohl einen radialen als auch einen axialen Versatz zwischen antreibender Welle und angetriebener Welle ausgleicht und gleichzeitig eine spielfreie Drehmomentübertragung von der antreibenden Welle auf die angetriebene Welle gewährleistet. Gleichzeitig ist die Vorrichtung konstruktiv einfach und benötigt bei höchstmöglicher Funktionalität nur wenig Bauraum.

Beispielsweise ist die antreibende Welle eine Kurbelwelle einer Brennkraftmaschine und die angetriebene Welle eine Getriebeeingangswelle eines Getriebes.

Zur einfachen Anpassung an verschiedene Wellen bzw. deren Anbauten, die mit der Vorrichtung zu verbinden ist, ist an der Lasche ein elastischer Verbinder angeordnet, welcher die radial außen liegende Befestigung sowie den zweiten Verformungsbereich trägt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine erste bevorzugte Ausführungsform einer erfindungsgemäßen Vorrichtung zur Drehmomentübertragung in schematischer perspektivischer Ansicht und
- Fig. 2: eine zweite bevorzugte Ausführungsform einer erfindungsgemäßen Vorrichtung zur Drehmomentübertragung in schematischer perspektivischer Ansicht.

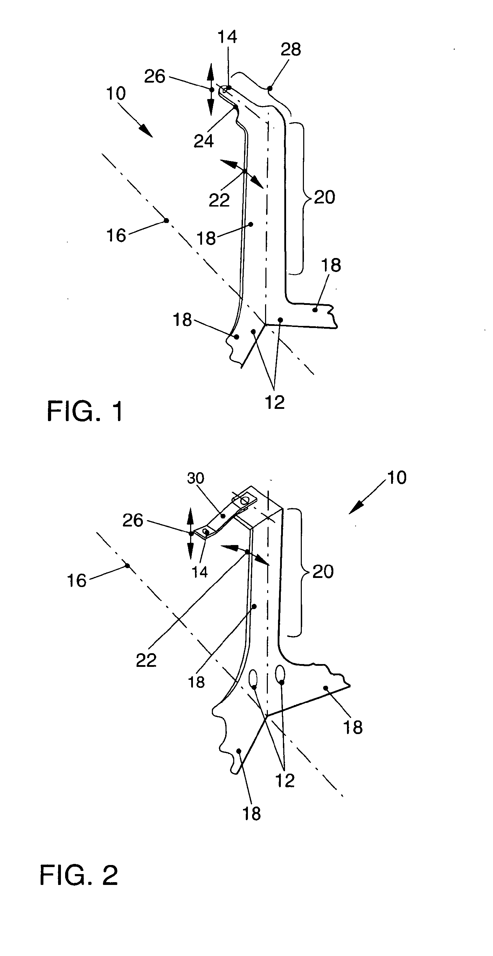

Die in Fig. 1 dargestellte erste bevorzugte Ausführungsform einer erfindungsgemäßen Vorrichtung 10 zur Drehmomentübertragung von einer nicht dargestellten antreibenden Welle, beispielsweise einer Kurbelwelle einer Brennkraftmaschine, auf eine nicht dargestellten angetriebene Welle, beispielsweise eine Getriebeeingangswelle eines Getriebes, umfaßt eine radial innen liegende Befestigung 12 für die antreibende Welle und eine radial außen liegende Befestigung 14 für die angetriebene Welle, wobei hier der Ausdruck "Welle" auch entsprechende Anbauteile an den Drehkörpern mit umfaßt, wie beispielsweise Schwungmasse oder Torsionsschwingungsdämpfer, welche mit den entsprechenden Befestigungen 12, 14 der Vorrichtung 10 verbindbar sind. Die Vorrichtung 10 dreht sich zusammen mit den Wellen um eine Drehachse 16. In der in Fig. 1 dargestellten Ausführungsform weist diese drei identisch ausgebildete Arme 18 auf, von denen nur einer vollständig dargestellt ist. Die gleiche Funktionalität kann jedoch grundsätzlich auch unter Verwendung einer größeren oder kleineren Anzahl entsprechend geformter Arme erreicht werden, die nicht zwangsläufig gleichgeformt sein müssen.

Zwischen der radial innen liegenden Befestigung 12 und der radial außen liegenden Befestigung 14 weist die Vorrichtung am Arm 18 einen ersten Verformungsbereich 20 mit entsprechender Elastizität auf, in dem sich der Arm 18 elastisch verformen und eine Bewegung gemäß Pfeil 22 ausführen kann. Auf diese Weise ist eine axiale Relativbewegung zwischen der radial innen liegenden Befestigung 12 und der radial außen liegenden Befestigung 14 möglich, so daß die Vorrichtung 10 einen axialen Versatz zwischen den Wellen ausgleicht, ohne dabei entsprechende Kräfte von der antreibenden auf die angetriebene Welle zu übertragen.

An einem der radial innen liegenden Befestigung 12 abgewandten Ende des Armes 18 ist dieser rechtwinklig umgebogen, so daß sich senkrecht zum Arm 18 und parallel zur Drehachse 16 eine Lasche 24 erstreckt, die an ihrem freien Ende die radial außen liegende Befestigung 14 trägt. Diese Lasche 24 weist zwischen der Umbiegung und der radial außen liegenden Befestigung 14 einen zweiten Verformungsbereich 28 mit entsprechender Elastizität auf, so daß sich die Lasche 24 elastisch verformen und eine Bewegung gemäß Pfeil 26 ausführen kann. Auf diese Weise ist eine radiale Relativbewegung zwischen der radial innen liegenden Befestigung 12 und der radial außen liegenden Befestigung 14 möglich, so daß die Vorrichtung 10 einen radialen Versatz zwischen den Wellen ausgleicht, ohne dabei entsprechende Kräfte von der antreibenden auf die angetriebene Welle zu übertragen.

In Umfangsrichtung ist jedoch keinerlei Relativbewegung zwischen den Befestigungen 12 und 14 möglich. Die Vorrichtung 10 ist somit als Verbindungselement derart konzipiert, daß zwar das Drehmoment, nicht aber die axialen und radialen Zwangskräfte von einer Primärseite (antreibende Welle) auf die Sekundärseite (angetriebene Welle) übertragen werden.

In der alternativen Ausführungsform gemäß Fig. 2 sind funktionsgleiche Teile mit gleichen Bezugsziffern wie in Fig. 1 bezeichnet, so daß zu deren Erläuterung auf die obige Beschreibung der Fig. 1 verwiesen wird. Im Unterschied zur Ausführungsform gemäß Fig. 1 ist an der Lasche 24 zusätzlich ein elastisches Element 30 angeordnet, welches die radial außen liegende Befestigung 14 trägt und in Pfeilrichtung elastisch verformbar ist. Der zweite Verformungsbereich der Lasche 24 kann somit entfallen. Auf diese Weise ist eine radiale Relativbewegung zwischen der radial innen liegenden Befestigung 12 und der radial außen liegenden Befestigung 14 möglich, so daß die Vorrichtung 10 einen radialen Versatz zwischen den Wellen ausgleicht, ohne dabei entsprechende Kräfte von der antreibenden auf die angetriebene Welle zu übertragen.

Durch das elastische Element 30 kann die radial außen liegende Befestigung 14 an ein entsprechendes Bauteil an der angetriebenen Welle, wie beispielsweise eine Schwungmasse, entsprechend angepaßt werden. Hierzu ist lediglich einfach das elastische Element 30 entsprechend auszubilden. Da in Umfangsrichtung kein Verformungsbereich existiert, erfolgt die Drehmomentübertragung spielfreie.

### BEZUGSZEICHENLISTE

- 10: Vorrichtung zur Drehmomentübertragung
- 12: radial innen liegende Befestigung
- 14: radial außen liegende Befestigung
- 16: Drehachse
- 18: Arm
- 20: erster Verformungsbereich
- 22: Pfeil
- 24: Lasche
- 26: Pfeil
- 28: zweiter Verformungsbereich
- 30: elastische Element

## Patentansprüche

1. Vorrichtung (10) zur Drehmomentübertragung von einer antreibenden Welle auf eine angetriebene Welle, wobei die Vorrichtung (10) eine radial innen liegende Befestigung (12) für eine der beiden Wellen und eine radial außen liegende Befestigung (14) für die entsprechend andere Welle aufweist, **dadurch gekennzeichnet, daß** die Vorrichtung (10) zwischen der radial innen liegenden Befestigung (12) und der radial außen liegenden Befestigung (14) einen ersten Verformungsbereich (20) aufweist, welcher mittels elastischer Verformung eine axiale Relativbewegung (22) zwischen der radial innen liegenden Befestigung (12) und der radial außen liegenden Befestigung (14) ermöglicht, und daß die Vorrichtung (10) an der radial außen liegenden Befestigung (14) eine sich parallel zu den Wellen erstreckende Lasche (24) mit einem zweiten Verformungsbereich (28) aufweist, welcher mittels elastischer Verformung eine radiale Relativbewegung (26) zwischen der radial innen liegenden Befestigung (12) und der radial außen liegenden Befestigung (14) ermöglicht.

2. Vorrichtung (10) nach Anspruch 1, **dadurch gekennzeichnet, daß** die antreibende Welle eine Kurbelwelle einer Brennkraftmaschine und die angetriebene Welle eine Getriebeeingangswelle eines Getriebes ist.

3. Vorrichtung (10) nach Anspruch 1 oder 2, **dadurch gekennzeichnet, daß** an der Lasche (24) ein elastischer Verbinder (30) angeordnet ist, welcher die radial außen liegende Befestigung (14) sowie den zweiten Verformungsbereich (28) trägt.
